# EUROPÄISCHE PATENTANMELDUNG

(11) **EP 4 403 539 A1**
(43) Veröffentlichungstag der Anmeldung: **24.07.2024**
(21) Anmeldenummer: 24152301.8
(22) Anmeldetag: 17.01.2024
(51) Int. Cl.: C05F 11/00, C05F 9/04, C05F 11/08

(54) **SUBSTRATAUSGANGSSTOFF AUF DER BASIS VON MISCANTHUS X GIGANTEUS UND VERFAHREN ZU DESSEN HERSTELLUNG**

(30) Priorität: 23.01.2023 EP 23152922
(71) Anmelder: Floragard Beteiligungs-GmbH, 26135 Oldenburg (DE)
(72) Erfinder: Temming, Winfried, 26209 Hatten (DE); Grießer, Simon, 14089 Berlin (DE)
(74) Vertreter: Flügge, Katharina

(57) **Zusammenfassung**

Die Erfindung betrifft einen Substratausgangsstoff für Kultursubstrate und/oder Bodenhilfsstoffe, ein Verfahren zur Herstellung von Substratausgangsstoff für Kultursubstrate und/oder Bodenhilfsstoffe und eine Verwendung von *Miscanthus x giganteus* zur Herstellung eines Substratausgangsstoffes für Kultursubstrate und/oder Bodenhilfsstoffe und/oder zur Herstellung eines Torfersatzstoffes, sowie einen Substratausgangsstoff hergestellt nach einem erfindungsgemäßen Verfahren.

## Beschreibung

Die Erfindung betrifft einen Substratausgangsstoff für Kultursubstrate und/oder Bodenhilfsstoffe gemäß Anspruch 1, ein Verfahren zur Herstellung von Substratausgangsstoff für Kultursubstrate und/oder Bodenhilfsstoffe gemäß Anspruch 7 und eine Verwendung von *Miscanthus x giganteus* zur Herstellung eines Substratausgangsstoffes für Kultursubstrate und/oder Bodenhilfsstoffe und/oder zur Herstellung eines Torfersatzstoffes gemäß Anspruch 14, sowie einen Substratausgangsstoff hergestellt nach einem erfindungsgemäßen Verfahren gemäß Anspruch 15.

Die vorliegende Erfindung betrifft einen Substratausgangsstoff für Kultursubstrate und/oder Bodenhilfsstoffe auf Basis des nachwachsenden Rohstoffes *Miscanthus x giganteus* und ein Verfahren zu dessen Herstellung. Auf Basis des nachwachsenden Rohstoffes *Miscanthus x giganteus,* der in einem speziell entwickelten anaeroben Verfahren unter Hinzunahme von Additiven veredelt wird, wird ein neuer Ausgangsstoff zur Verfügung gestellt, der besonders gute Eigenschaften besitzt, insbesondere Torf-ähnliche Eigenschaften, ganz besonders Weißtorf-ähnliche Eigenschaften besitzt.

### Stand der Technik

In der Herstellung von Kultursubstraten (Blumenerden für den Hobbygartenbau und Substrate für den Erwerbsgartenbau) und Bodenhilfsstoffen für die Bodenverbesserung sind die Hauptvolumenbildner organischen Ursprungs (vgl. IVG 2023; https://www.erden-substrate.info/substratausgangsstoffe/substratausgangsstoffe). Die Volumenbildner für Kultursubstrate werden als organische Substratausgangsstoffe bezeichnet. Hochmoortorf, Grünkompost, Holzfaser, Rindenhumus und Kokosprodukte sind aktuell die Hauptbestandteile von Kultursubstraten und Bodenhilfsstoffen. Hochmoortorf ist das Resultat aus einem geochemischen Prozess, der Vertorfung, und besteht aus abgestorbenen und nicht voll zersetzten Pflanzenresten. Vor allem die Torfmoose bilden das Ursprungsmaterial für Hochmoortorf. Durch die gleichbleibende Verfügbarkeit und Qualität und die stabilen chemischen und physikalischen Eigenschaften hat sich Hochmoortorf als Hauptausgangsstoff für Kultursubstrate über die vergangenen Jahrzehnte bewährt. Hochmoortorf hat einen niedrigen pH-Wert, niedrige Nährstoffgehalte, hohe Wasserspeicherfähigkeiten und die günstigen Eigenschaften, dass der pH-Wert passgenau eingestellt werden kann. Zudem zeichnet sich Hochmoortorf durch eine gute Strukturstabilität und eine damit einhergehende, geringe Zersetzung aus. Hochmoortorf kann nahezu universell und in einer Vielzahl von Kombinationen als Hauptbestandteil von Rezepturen von Kultursubstraten eingesetzt werden. Dies ist einzigartig und kann aktuell von keinem anderen Substratausgangsstoff geleistet werden. Bei Hochmoortorf wird ferner unterschieden zwischen Weiß- und Schwarztorf. Weißtorf ist weniger stark, Schwarztorf stärker zersetzt.

Grünkompost ist das Resultat aus Grünschnittabfällen, die in der Regel in regionalen Sammelstellen angeliefert und kompostiert werden. Ein überwachtes und standardisiertes Verfahren zur Herstellung von Grünkompost ist notwendig für den Einsatz in Blumenerden und Kultursubstraten. Insb. Hygiene, Struktur, Nährstoff- und Salzgehalte, Pflanzenverträglichkeit, Fremdstoffe, Schwermetallgehalte u.v.m. müssen in einem definierten Rahmen bleiben und weisen naturgemäß und trotz der Anstrengungen hohe Salz-, Kalium- und Phosphatwerte sowie einen hohen pH-Wert auf, was den Einsatz neben der hohen Schüttdichte stark begrenzt.

Fichtenholz-, selten auch Kiefernholzhackschnitzel, sind der Ursprung der Holzfasern. Holzfasern sind das Resultat aus verschiedenen thermomechanischen Aufschlusstechniken (Mühle, Refiner, Extruder). Holzfasern zeichnen sich durch hohe Drainagewirkung, hohe Luftkapazität und Wiederbenetzbarkeit aus und führen geringe Salz- und Nährstofffrachten mit sich, was sie zu einem gut einsetzbaren Substratausgangsstoff machen. Aufgrund der sehr geringen Wasserspeicherfähigkeit, der möglichen Stickstoffbindung sowie der relativ schnellen Zersetzung sind Kultursubstrate aus 100% Holzfasern nicht möglich.

Rindenhumus ist das Resultat aus kompostierter Nadelholzrinde (zumeist Fichte und Kiefer). Beim Kompostierungsvorgang werden die pflanzenschädlichen Eigenschaften der Rohrinde aufgehoben und die Stickstoff-Immobilisierung auf ein verträgliches Maß begrenzt. Die relativ hohe Schüttdichte machen Rindenhumus neben der begrenzten Verfügbarkeit zu einem in seiner Quantität limitierten Ausgangsstoff. Neben dem beschriebenen Kompostierungsverfahren müssen die Werte in einem ähnlichen Ablauf kontrolliert werden, ähnlich wie bei Grünkompost auch.

Kokosprodukte für die Produktion von Kultursubstraten und Bodenhilfsstoffen sind Kokosmark (feine Struktur), Kokosfasern (faserige Struktur) und Kokoschips (grobe Struktur), die aus dem Mesokarp der Kokosnuss resultieren. Gute Wiederbenetzbarkeit, hohe Wasserkapazität, gute Kapillarität, Strukturstabilität und eine geringe Schüttdichte sorgen für ein gutes Eigenschaftsprofil. Jedoch stehen den qualitativen Vorteilen ökologische und logistische Herausforderungen entgegen, weshalb Kokosprodukte nur begrenzt einsetzbar sind.

Hochmoortorf ist der qualitative Standard für die Bewertung eines Substratausgangsstoffs. Allerdings wird Hochmoortorf auf bereits vorgenutzten und entwässerten Hochmooren abgebaut. Der Torfabbau führt durch die Entnahme zu einer beschleunigten Freisetzung von klimarelevanten Gasen und soll weitgehend reduziert werden, sodass die Hauptrohstoffquelle für die Herstellung von Kultursubstraten sukzessive verringert wird (Stand 2023) [siehe u.a. unter: H. Höper (2015): Treibhausgasemissionen aus Mooren und Möglichkeiten der Verringerung. TELMA Beiheft 5, S.133-158 Hannover].

Im Stand der Technik ist in EP 3 233 759 B1 ein Verfahren zur Herstellung nährstoffreicher und wasserspeichernder Böden oder Bodensubstrate beschrieben.

Jedoch bringen bisher entwickelte und einsatzfähige alternative Substratausgangsstoffe entweder qualitative, quantitative, ökologische oder ökonomische Nachteile mit sich, die nicht überwunden werden können.

Hiervon ausgehend, liegt der vorliegenden Erfindung die Aufgabe zugrunde, einen Substratausgangsstoff für Kultursubstrate und/oder Bodenhilfsstoffe zur Verfügung zu stellen, durch welchen die oben genannten Probleme gelöst werden und der die beschriebenen Nachteile nicht aufweist.

Weiterhin liegt der vorliegenden Erfindung die Aufgabe zugrunde, einen Substratausgangsstoff für Kultursubstrate und/oder Bodenhilfsstoffe zur Verfügung zu stellen, durch welchen die oben genannten Probleme gelöst werden und der die beschriebenen Nachteile nicht aufweist, wobei dieser auf einem nachwachsenden Rohstoff basiert.

Ebenso liegt der vorliegenden Erfindung die Aufgabe zugrunde, einen Substratausgangsstoff für Kultursubstrate und/oder Bodenhilfsstoffe zur Verfügung zu stellen, wobei der Substratausgangsstoff möglichst viele Torf-ähnliche, insbesondere Weißtorf-ähnliche Eigenschaften besitzt, wie zum Beispiel einen niedrigen pH-Wert, einen niedrigen Nährstoffgehalt, eine hohe Wasserkapazität, eine hohe Luftkapazität, eine gute Strukturstabilität, eine geringe Belebung, eine geringe N-Immobilisierung und geringe Schadstoffgehalte. Weiterhin sollte der zur Verfügung zu stellende Substratausgangsstoff eine Möglichkeit zur gezielten Aufdüngung bieten. Weiter liegt der vorliegenden Erfindung die Aufgabe zugrunde, Torf, insbesondere Weißtorf, möglichst in seinen Eigenschaften zu reproduzieren.

### Beschreibung der Erfindung

Eine Lösung zumindest einer der genannten Aufgaben wird durch die Merkmale des Anspruchs 1 beschrieben. Demnach ist es erfindungsgemäß vorgesehen, dass ein Substratausgangsstoff für Kultursubstrate und/oder Bodenhilfsstoffe bereitgestellt wird, der fermentiertes *Miscanthus x giganteus,* Wasser, Bakterien und eine Kohlenstoff-Quelle enthält, wobei der Anteil von fermentiertem *Miscanthus x giganteus* bei 70 bis 98 Vol.-% bezogen auf das Gesamtvolumen des Substratausgangsstoffs liegt.

In einer bevorzugten Ausführungsform des erfindungsgemäßen Substratausgangsstoffes ist die Kohlenstoff-Quelle Saccharose oder Melasse. In einer weiter bevorzugten erfindungsgemäßen Ausführungsform sind die Bakterien heterofermentative und lebende Milchsäurebakterien.

In einer besonders bevorzugten Ausführungsform des erfindungsgemäßen Substratausgangsstoffes besitzt der Substratausgangsstoff einen pH-Wert von ≤ 7, vorzugsweise von ≤ 6, bevorzugt von ≤ 5.

In einer ebenso bevorzugten Ausführungsform des erfindungsgemäßen Substratausgangsstoffes enthält der Substratausgangsstoff bis zu 80 Vol.-%, vorzugsweise bis zu 85 Vol.-%, weiter bevorzugt bis zu 90 Vol.-%, ganz bevorzugt bis zu 95 Vol.-%, ganz besonders bevorzugt bis zu 98 Vol.-%, fermentiertes *Miscanthus x giganteus,* jeweils bezogen auf das Gesamtvolumen des Substratausgangsstoffes.

In einer weiter bevorzugten Ausführungsform des erfindungsgemäßen Substratausgangsstoffes liegt der Anteil von fermentiertem Miscanthus x giganteus bei 75 bis 98 Vol.-%, vorzugsweise bei 80 bis 98 Vol.-%, weiter bevorzugt bei 85 bis 98 Vol.-%, ganz bevorzugt bei 90 bis 98 Vol.-%, ganz besonders bevorzugt bei 95 bis 98 Vol.-%, jeweils bezogen auf das Gesamtvolumen des Substratausgangsstoffes.

In einer ebenso bevorzugten Ausführungsform des erfindungsgemäßen Substratausgangsstoffes, vorzugsweise nach zumindest einer der aufgeführten bevorzugten Ausführungsformen, hat der Substratausgangsstoff einen niedrigen Salzgehalt, vorzugsweise in einer Konzentration von 0,2 bis 1,5 g/L, bevorzugt in einer Konzentration von 0,3 bis 1,25 g/L, weiter bevorzugt in einer Konzentration von 0,5 bis 1,0 g/L, jeweils bezogen auf das Gesamtvolumen des Substratausgangsstoffes.

In einer weiter bevorzugten Ausführungsform des erfindungsgemäßen Substratausgangsstoffes hat der Substratausgangsstoff eine Körnung von ≤ 20 mm, vorzugsweise eine Körnung von ≤ 15 mm, weiter bevorzugt von ≤ 10 mm.

In einer weiter bevorzugten Ausführungsform des erfindungsgemäßen Substratausgangsstoffes enthält der Substratausgangsstoff einen Anteil von weniger als 30 Vol.-%, vorzugsweise von weniger als 20 Vol.-%, bevorzug von weniger als 10 Vol.-%, weiter bevorzugt von weniger als 5 Vol.-%, bezogen auf das Gesamtvolumen des Substratausgangsstoffs, einer weiteren Rohstoffpflanze. In einer besonders bevorzugten Ausführungsform des erfindungsgemäßen Substratausgangsstoffes enthält der Substratausgangsstoff keinen Anteil an Staudenknöterich. In einer weiter besonders bevorzugten Ausführungsform des erfindungsgemäßen Substratausgangsstoffes enthält der Substratausgangsstoff keine weitere Rohstoffpflanze.

Eine weitere Lösung zumindest einer der eingangs genannten Aufgaben wird durch die Merkmale des Anspruchs 7 beschrieben.

In diesem weiteren Aspekt der vorliegenden Erfindung wird ein erfindungsgemäßes Verfahren bereitgestellt, das die Schritte umfasst:
a) Bereitstellen einer *Miscanthus* x *giganteus*-Zusammensetzung, die *Miscanthus x giganteus,* ein Siliermittel, Wasser und optional Salze enthält, wobei der Anteil von *Miscanthus x giganteus* bei 70 bis 98 Vol.-%, vorzugsweise bei 75 bis 98 Vol.-%, weiter vorzugsweise bei 80 bis 98 Vol.-%, noch weiter bevorzugt bei 85 bis 98 Vol.-%, ganz bevorzugt bei 90 bis 98 Vol.-%, ganz besonders bevorzugt bei 95 bis 98 Vol.-%, jeweils bezogen auf das Gesamtvolumen der *Miscanthus* x *giganteus*-Zusammensetzung liegt und
b) Fermentieren der in a) bereitgestellten Zusammensetzung.

In einer bevorzugten Ausführungsform des erfindungsgemäßen Verfahrens liegt *Miscanthus x giganteus* in der *Miscanthus* x *giganteus*-Zusammensetzung in Form von *Miscanthus* x giganteus-Häcksel vor, vorzugsweise mit einer Körnung von ≤ 100 mm, bevorzugt mit einer Körnung von ≤ 70 mm, weiter bevorzugt mit einer Körnung von ≤ 50 mm.

In einer weiter bevorzugten Ausführungsform des erfindungsgemäßen Verfahrens liegt die *Miscanthus* x *giganteus*-Zusammensetzung in Schritt a) *Miscanthus x giganteus,* das Siliermittel und Wasser im Verhältnis von 0,5 - 2 Tonnen : 2 - 7 kg : 0,5 - 2 m³, vorzugsweise im Verhältnis von 0,75 - 1,5 Tonnen : 3 - 6 kg : 0,75 - 1,5 m³, bevorzugt im Verhältnis von 1 Tonne : 5 kg : 1 m³ vor.

In einer ebenso bevorzugten Ausführungsform des erfindungsgemäßen Verfahrens enthält das Siliermittel eine Bakterien-Zusammensetzung, vorzugsweise aus heterofermentativen Milchsäurebakterien, besonders bevorzugt aus heterofermentativen Milchsäurebakterien in einer Konzentration von mindestens 100 × 10⁷ KBE pro g, vorzugsweise von mindestens 100 × 10⁸ KBE pro g, bevorzugt von mindestens 100 × 10⁹ KBE pro g, jeweils bezogen auf die Bakterien-Zusammensetzung und eine Kohlenstoff-Quelle, vorzugsweise Saccharose oder Melasse.

In einer ebenso bevorzugten Ausführungsform des erfindungsgemäßen Verfahrens, vorzugsweise nach zumindest einer der aufgeführten bevorzugten Ausführungsformen, erfolgt das Fermentieren gemäß Schritt b) unter Pressung der *Miscanthus x giganteus-*Zusammensetzung, vorzugsweise mit einem Druck von bis zu 50 bar, weiter bevorzugt mit einem Druck von bis zu 75 bar, besonders bevorzugt mit einem Druck von bis zu 100 bar, ganz bevorzugt mit einem Druck von bis zu 125 bar.

In einer weiteren bevorzugten Ausführungsform des erfindungsgemäßen Verfahrens erfolgt das Fermentieren gemäß Schritt b) über einen Zeitraum von 6 bis 15 Wochen, vorzugsweise 12 bis 14 Wochen, bevorzugt 9 bis 11 Wochen, besonders bevorzugt 6 bis 9 Wochen, ganz besonders bevorzugt 6 bis 8 Wochen.

In einer ebenso bevorzugten Ausführungsform des erfindungsgemäßen Verfahrens erfolgt das Fermentieren gemäß Schritt b) bei einer Temperatur von 5°C bis 50°C, vorzugsweise 8°C bis 45°C, bevorzugt 10°C bis 40°C, weiter bevorzugt 15°C bis 30°C.

Ein Vorteil des erfindungsgemäßen Verfahrens besteht weiterhin darin, dass im Vergleich zu Verfahren, die bei höheren Temperaturen (z.B. über 70°C) fermentieren, kein hoher Volumenverlust erhalten wird.

In einer ebenso bevorzugten Ausführungsform des erfindungsgemäßen Verfahrens umfasst das Verfahren den weiteren Schritt:
c) Zerkleinerung der nach Schritt b) erhaltenen fermentierten *Miscanthus x giganteus*-Zusammensetzung,
wobei vorzugsweise eine Körnung von ≤ 20 mm, vorzugsweise eine Körnung von ≤ 15 mm, weiter bevorzugt eine Körnung von ≤ 12 mm, ganz bevorzugt eine Körnung von ≤ 10 mm erzielt wird, die vorzugsweise homogen ist.

In einer besonders bevorzugten Ausführungsform des erfindungsgemäßen Substratausgangsstoffes wird dieses durch ein erfindungsgemäßes Verfahren gemäß der vorliegenden Erfindung (wie zuvor beschrieben) hergestellt.

In einer besonders bevorzugten Ausführungsform ist der erfindungsgemäße Substratausgangsstoff für Kultursubstrate und/oder Bodenhilfsstoffe hergestellt nach einem Verfahren umfassend die Schritte
a) Bereitstellen einer *Miscanthus* x *giganteus*-Zusammensetzung, die *Miscanthus x giganteus,* ein Siliermittel, Wasser und optional Salze enthält, wobei der Anteil von *Miscanthus x giganteus* bei 70 bis 98 Vol.-%, bezogen auf das Gesamtvolumen der *Miscanthus* x *giganteus*-Zusammensetzung liegt und
b) Fermentieren der in a) bereitgestellten Zusammensetzung.

Bei einer besonders bevorzugten Ausführungsform des erfindungsgemäßen Substratausgangsstoffes ist der Substratausgangsstoff hergestellt nach einem erfindungsgemäßen Verfahren gemäß der vorliegenden Erfindung, vorzugsweise nach zumindest einer bevorzugten Ausführungsform des erfindungsgemäßen Verfahrens.

Eine Lösung zumindest einer der genannten Aufgaben wird weiter durch die Merkmale des Anspruchs 14 beschrieben.

Dieser Aspekt der vorliegenden Erfindung umfasst die Verwendung von *Miscanthus x giganteus* zur Herstellung eines Substratausgangsstoffes für Kultursubstrate und Bodenhilfsstoffe und/oder die Verwendung von *Miscanthus x giganteus* zur Herstellung eines Torfersatzstoffes.

Ebenso ein weiterer Aspekt der vorliegenden Erfindung umfasst die Verwendung eines Substratausgangsstoff hergestellt nach einem erfindungsgemäßen Verfahren, vorzugsweise nach zumindest einer der bevorzugten Ausführungsformen, als Torfersatzstoff.

Allgemeine Anforderungen bzgl. Produktqualität eines Substratausgangsstoffs sind ein niedriger pH-Wert, niedrige Salzgehalte, geringe N-Immobilisierung, eine hohe Pufferkapazität, ein hoher Wasserspeicher, gute Luftkapazität, Strukturstabilität und Verfügbarkeit, sowie ökonomische Darstellbarkeit.

Für die vorliegende Erfindung ist es wesentlich, dass der erfindungsgemäße Substratausgangsstoff nicht auf einem Sekundärrohstoff, sondern auf einem nachwachsenden Rohstoff basiert. Ein Vorteil eines nachwachsenden Rohstoffes liegt darin, dass die Verfügbarkeit gesichert ist.

Somit enthält in einer weiter bevorzugten Ausführungsform des erfindungsgemäßen Substratausgangsstoffes der Substratausgangsstoff keinen weiteren Biomassen-Bestandteil außer *Miscanthus x giganteus.* Weiter bevorzugt ist, dass ein erfindungsgemäßer Substratausgangsstoff keinen Sekundärrohstoff enthält.

Gemäß der vorliegenden Erfindung wird der erfindungsgemäße Substratausgangsstoff basierend auf der Rohstoffpflanze *Miscanthus x giganteus* hergestellt. Die Rohstoffpflanze *Miscanthus x giganteus,* ist eine C4-Pflanze (sehr schnell wachsend) mit gleichzeitigem Humusaufbau und Ökosystemdienstleistungen. C4 bedeutet, dass eine erhöhte Kohlenstoffassimilation stattfindet und die Vorfixierung eines kohlenstoffoptimalen Stoffwechsels den Pflanzenaufwuchs begünstigt. Der vorteilhafte Humusaufbau ist Resultat aus dem Blattfall über den Winter. Die Pflanze wird überdies als "Low Input - Pflanze" bezeichnet mit einer Humusbilanz von + 8,5t pro ha/a. Im Gegensatz zu anderen Kulturpflanzen vermehrt sie die eingesetzte Energie um ein Vielfaches. Halme bzw. Stängel bleiben über den Winter auf dem Feld, was weitere Ökosystemdienstleistungen für Tiere und Böden ermöglicht. Die Ernte der *Miscanthus x giganteus*-Halme mittels Feldhäckslern erfolgt im März / April eines jeden Jahres. Die extensive Dauerkultur wird nur einmalig gepflanzt, ein Säen wie bei einjährigen Kulturen entfällt. Dies hat den Vorteil, dass die Krümelstruktur der Böden geschont wird.

Allgemein könnten mehrere Aufbereitungsoptionen für *ein Miscanthus x giganteus -* Häckselgut zur Herstellung eines Substratausgangsstoffes in Betracht gezogen werden. Optionen wären eine Variante ohne Behandlung, eine Kompostierung, eine Zerfaserung, eine Fermentierung oder auch eine Verkohlung.

Die Erfinder der vorliegenden Erfindung haben überraschend festgestellt, dass für die Herstellung eines erfindungsgemäßen Substratausgangsstoffes mit vorzugsweise Torf-ähnlichen Eigenschaften ein erfindungsgemäßes Verfahren enthaltend den Schritt der Fermentierung von *Miscanthus x giganteus* zu einem Substratausgangsstoff mit besonders guten Eigenschaften führt, insbesondere zu einem Substratausgangsstoff mit besonders guten Torf-ähnlichen, insbesondere Weißtorf-ähnlichen Eigenschaften.

Den Erfindern ist es überraschenderweise gelungen, auf Basis von *Miscanthus x giganteus* einen neuen Substratausgangsstoff herzustellen. Dies ist insbesondere überraschend, weil *Miscanthus x giganteus* im Rohzustand im Stand der Technik als nicht silierbar gilt, weil es sich um ein sehr trockenes Substrat mit zumindest teilweise über 80% Trockenmasse handelt.

Der Schritt der Fermentierung in dem erfindungsgemäßen Verfahren erzielt zudem verschiedene Vorteile. Er sorgt für einen Erhalt der Biomasse (kein Volumenschwund), und hat eine geringe Emission von Treibhausgasen.

In einer bevorzugten Ausführungsform des erfindungsgemäßen Verfahrens erfolgt das Fermentieren gemäß Schritt b) anaerob. Dies bedeutet, dass das unter Luftabschluss zu fermentierende Material während der Fermentationsphase, d.h. während des Fermentierens gemäß Schritt b) nicht zugänglich ist. Vorzugsweise ist somit eine Zufuhr von Luft während des Fermentierens gemäß Schritt b) nicht möglich.

In einer weiter bevorzugten Ausführungsform des erfindungsgemäßen Verfahrens wird vor Schritt b) die Zusammensetzung homogen gemischt, vorzugsweise in einer Trommel.

In einer bevorzugten Ausführungsform des erfindungsgemäßen Verfahrens enthält das Siliermittel homo- und/oder heterofermentative Milchsäurebakterien. Vorzugsweise enthält das Siliermittel eine heterofermentative Milchsäurebakterien-Zusammensetzung in einer Konzentration von mindestens 100 × 10⁷ KBE pro g, vorzugsweise von mindestens 100 × 10⁸ KBE pro g, bevorzugt von mindestens 100 × 10⁹ KBE pro g, jeweils bezogen auf das Gewicht der Milchsäurebakterien-Zusammensetzung. In einem erfindungsgemäßen Verfahren enthält das Siliermittel vorzugsweise CAMsil TS (CAM Energy GmbH). CAMsil TS besteht aus einem EU-registrierten lebenden heterofermentativen Milchsäurebakterienstamm mit einer Konzentration von 100 × 10⁹ KBE pro g. Der Bakterienstamm ist bei der EFSA unter Kategorie 1k Silierzusatzstoffe registriert (EU-Registrierungs-Nr. 1k20715), und nach Verordnung (EG) Nr. 1829/2003 und 1830/2003 garantiert GMO frei (ohne Anwendung gentechnischer Verfahren hergestellt). CAMsil TS kann mit jeder Verdünnungsrate zwischen 100 ml und 2 Litern je Tonne Siliergut aufgetragen werden, sofern stets 1 g CAMsil TS je Tonne Siliergut eingemischt wird (100.000 KBE pro g Silage). In einer weiter bevorzugten Ausführungsform des erfindungsgemäßen Verfahrens enthält das Siliermittel eine Kohlenstoff-Quelle, vorzugsweise Saccharose oder Melasse, bevorzugt Saccharose. In einer besonders bevorzugten Ausführungsform des erfindungsgemäßen Verfahrens enthält das eingesetzte Siliermittel einen Anteil von > 90 Gew.-%, vorzugsweise einen Anteil von > 95 Gew.-%, bevorzugt einen Anteil von > 98 Gew.-%, ganz bevorzugt einen Anteil von > 99 Gew.-%, Saccharose, jeweils bezogen auf das Gesamtgewicht des Siliermittels. In einer besonders bevorzugten Ausführungsform des erfindungsgemäßen Verfahrens enthält das eingesetzte Siliermittel einen Anteil von < 10 Gew.-%, vorzugsweise einen Anteil von < 5 Gew.-%, bevorzugt einen Anteil von < 2 Gew.-%, besonders bevorzugt einen Anteil von < 1 Gew.-%, ganz besonders bevorzugt einen Anteil von < 0,2 Gew.-%, heterofermentative Milchsäurebakterien-Zusammensetzung, vorzugsweise CAMsil TS, jeweils bezogen auf das Gesamtgewicht des Siliermittels.

In einer bevorzugten Ausführungsform des erfindungsgemäßen Verfahrens erfolgt die Zerkleinerung gemäß Schritt c) mechanisch.

Das vorliegende erfindungsgemäße Verfahren und der zur Verfügung gestellte erfindungsgemäße Substratausgangsstoff kann das Problem der Notwendigkeit von Hochmoortorf bei der Herstellung von Kultursubstraten und Bodenhilfsstoffen zumindest teilweise lösen und ist somit besser als bisherige Ansätze und Lösungsversuche im Stand der Technik.

Im Rahmen der vorliegenden Erfindung ist der erfindungsgemäße Substratausgangsstoff ein behandelter Rohstoff, der eine von mehreren Komponenten eines Kultursubstrates bildet. Der erfindungsgemäße Substratausgangsstoff ist kein Kultursubstrat per se.

Die vorliegende Erfindung wird anhand der folgenden Beispiele, die nicht als Einschränkung des Anwendungsbereichs der Erfindung zu verstehen sind, näher beschrieben.

### BEISPIELE

### BEISPIEL 1 - Herstellung von erfindungsgemäßem Substratausgangsstoff

### Ausgangsstoffe

Zur Herstellung etwa eines Kubikmeters (1.000 Liter) erfindungsgemäßem Substratausgangsstoff, welcher möglichst Torf-ähnliche Eigenschaften besitzt, wurden folgende Komponenten verwendet: 1000 Liter *Miscanthus* x giganteus-Häckselgut mit ca. 80% Trockensubstanz und einer heterogenen Häckselstruktur (Körnung) von 0-30mm, 125 Liter Wasser, 5kg Prämix (Rezeptur gemäß Tabelle 1) und optional 1kg Postmix (Rezeptur gemäß Tabelle 2).

**Tabelle 1: Zusammensetzung Prämix**

| | |
|---|---|
| 99,9% | Saccharose |
| 0,1% | heterofermentative und lebende Milchsäurebakterien (CAMsil TS) |

**Tabelle 2: Zusammensetzung Postmix**

| | |
|---|---|
| 60% | Natriumpropionat |
| 30% | Natriumformiat |
| 10% | Natriumbenzoat |

### Verfahren

### - Zusammenführung:

Bei der Zusammenführung der Komponenten wurde zunächst das Häckselgut angenommen und die Schüttdichte sowie die Trockensubstanz bestimmt. Anschließend wurde basierend auf der Schüttdichte die genaue Menge Wasser, die dem Prozess zugeführt wird, bestimmt und festgelegt. In einem IBC-Container wurde der in Pulverform gelieferte Prämix in 1m³ Wasser eingemischt. Bei einer Schüttdichte von 125 kg/m³ *Miscanthus x* giganteus-Häckselgut wurde im Mischverhältnis von 125 Liter Wasser zu 0,625 kg Prämix das flüssige Wasser-Prämix-Gemisch dem Häckselgut in einer wasserdicht verkleideten Mischtrommel zugeführt und miteinander verbunden, sodass die *Miscanthus x* giganteus-Häcksel (insb. das darin enthaltene, wasserspeichernde Parenchym), die flüssigen Additive aufnehmen konnten. Der beschriebene Mischprozess kann je nach technischen Möglichkeiten variieren, jedoch immer unter Berücksichtigung der Mischungsverhältnisse. Gemeint ist hierbei, dass je nach Anwendung auch eine Mischanlage oder eine andere maschinelle Vorrichtung die Materialzusammenführung vornehmen kann.

### - Fermentationsvorbereitung:

Die Fermentationsvorbereitung des mit dem Wasser-Prämix-Gemisch versetzten *Miscanthus* x giganteus-Häckselguts bestand aus einer Verdichtung des Materials, einem luftdichten Verschluss mit dichter Folie und ggf. einer Beschwerung der Folie. Sobald die zu fermentierende Biomasse im aufgeführten Ablauf gemischt und homogenisiert worden war, wurde die Biomasse durch verschiedene Verdichtungs-Varianten für die Fermentierung (anaerobe Fermentierung) vorbereitet. Variante a: Verdichtungsprozess Fahrsilo: es wurden bis zu 5.000m³ Material in einem Fahrsilo (mit oder ohne feste Randmauern) verdichtet, mit luftdichter Folie abgedeckt und die Folie an den Rändern beschwert. Variante b: Verdichtungsprozess Schlauchsilo: es wurden bis zu 2.000m³ Material in einen Schlauchsilo verpresst. Variante c: Verdichtungsprozess Big Bales: es wurden 3-5m³ je Big Bales fortlaufend verpresst.

### - Fermentierung:

In der Fermentierungsphase wurden die relevanten Parameter überwacht und gemessen. Die Temperaturmessung stellte einen wichtigen Teil der Dokumentation dar. Die Idealtemperatur von 15-35°C wurde durchgängig gewährleistet. Die Messpunkte waren luftdicht verschlossen. Tägliche Messungen und Dokumentation wurden durchgeführt. Die Proben wurden mit je 20-50 Liter entnommen. Die Entnahme wurde repräsentativ vollzogen und die Entnahmestelle wurde unmittelbar nach Entnahme der Probe wieder verdichtet. Nach 12 Wochen war die Fermentierung abgeschlossen (*Miscanthus-*Ferment).

### - Homogenisierung und Prozesszuführung Variante a: Just-in-Time Verwendung

Nach der Fermentierungsphase erfolgte die Homogenisierung der Hälfte des fermentierten Materials (Miscanthus-Ferment) durch Zerkleinerung und ggf. Absiebung: das fermentierte Material (Miscanthus-Ferment) wurde physikalisch mit einer Mühle oder einem Schredder zerkleinert und ggf. nachfolgend abgesiebt, um eine homogene Häcksellänge von ca. 0-10mm zu erhalten. Und zwar wurde durch sukzessives Abtragen der Miete das Miscanthus-Ferment nach Entnahme Just-in-Time zerkleinert und unverzüglich für die Substratproduktion, d.h. in der Produktion von Kultursubstraten und Bodenhilfsstoffen verwendet.

### - Homogenisierung und Prozesszuführung Variante b: Nachbehandlung vor Verwendung

Die andere Hälfte des fermentierten Materials (Miscanthus-Ferment) wurde einer Nachbehandlung unterzogen. Nach Öffnen und Auflockern der gesamten Hälfte des Miscanthus-Ferments aus dem Fahrsilo, Schlauchsilo oder Big Bale wurde folgende Nachbehandlung vollzogen: das Material wurde physikalisch mit einer Mühle oder einem Schredder zerkleinert, wobei es dabei mit weiteren Additiven (Postmix) besprüht wurde. Dies ermöglichte die Lagerfähigkeit des Miscanthus-Ferments unter aeroben Bedingungen. Ggf. wurde nachfolgend abgesiebt, um eine homogene Häcksellänge von ca. 0-10mm zu erhalten. Das nachbehandelte Miscanthus-Ferment konnte zu einem späteren Zeitpunkt für die Produktion von Kultursubstraten und Bodenhilfsstoffen verwendet werden.

### Ergebnisse

Eigenschaften des erfindungsgemäßen Substratausgangsstoffes, das wie beschrieben hergestellt worden ist (ohne Postmix):
- pH-Wert (CaCl₂) 6,0-7,0
- Salzgehalt 0,5-1,0 g/l
- N (CaCl₂) 10-50 mg/l
- P₂O₅ (CAL) 40-100 mg/l
- K₂O (CAL) 200-700 mg/l
- Porenvolumen (EN13041) ca. 95 % (v/v)
- Wasserkapazität (EN 13041) ca. 40 % (v/v)
- Luftkapazität (EN 13041) ca. 55 % (v/v)
- Schüttdichte (EN 12580) ca. 300 kg/m³
- Körnung ca. 0-10 mm

### BEISPIEL 2

Verwendung von erfindungsgemäßem Substratausgangsstoff in Kultursubstrat
Es wurden 3 Vergleichs-Versuche durchgeführt. Als Kontrolle (Kontroll-Kultursubstrat) wurde jeweils Hochmoortorf verwendet.

### Es wurde hergestellt:

Ansatz 1: Kultursubstrat (= Hochmoortorf wie bei der Kontrolle) mit Beimischung von 30 Vol.-% eines erfindungsgemäßen Substratausgangsstoffes (der erfindungsgemäße Substratausgangsstoff wird hierin weiter als "Miscanthus-Mix A" bezeichnet), das gemäß Beispiel 1 jedoch mit einer Fermentationszeit von 9 Wochen hergestellt worden ist. Die fertige Mischung hat die Bezeichnung Kultursubstrat A.

Ansatz 2: Kultursubstrat (= Hochmoortorf wie bei der Kontrolle) mit Beimischung von 30 Vol.-% eines erfindungsgemäßen Substratausgangsstoffes (der erfindungsgemäße Substratausgangsstoff wird hierin weiter als "Miscanthus-Mix B" bezeichnet), das gemäß Beispiel 1 jedoch mit einer Fermentationszeit von 6 Wochen hergestellt worden ist. Die fertige Mischung hat die Bezeichnung Kultursubstrat B.

Tabelle 3 zeigt die Zusammensetzung und Eigenschaften von Kultursubstrat A und B gegenüber dem Kontroll-Kultursubstrat.

**Tabelle 3: Zusammensetzung und Eigenschaften von Kultursubstrat A und B gegenüber dem Kontroll-Kultursubstrat**

| | Torf | Miscanthus-Mix A bzw. B | PG-Mix | pH-Wert | Struktur |
|---|---|---|---|---|---|
| | m³ | m³ | kg/m³ | | |
| Kontroll - Kultursubstrat | 1 | | 1,5 | 5,6 | mittel |
| Kultursubstrat A bzw. B | 0,7 | 0,3 | 1,5 | 5,6 | mittel |

Für die Versuche mit Pflanzen wurde dem Kontroll-Kultursubstrat, dem Kultursubstrat A und dem Kultursubstrat B jeweils normaler Dünger (PG-Mix) mit 1,5 kg Dünger auf 1 m³ jeweiliges Substrat zugemischt. Durch Aufkalken wurde der pH-Wert ggf. eingestellt. Ansatz 3: Hergestelltes aufgedüngtes Kultursubstrat A wurde im Verhältnis 70 Vol.-% zu 30 Vol.-% mit fermentiertem Fichtenholzsiebgut vermischt (aufgedüngtes Kultursubstrat A 70 Vol.-% : Fichtenholzsiebgut 30 Vol.-%). Die fertige Mischung hat die Bezeichnung Kultursubstrat C.

Mit den nach Mischung, pH-Einstellung und Aufdüngung erhaltenen aufgedüngten Kultursubstraten A, B und C jeweils im Vergleich zu dem erhaltenen aufgedüngten Kontroll-Kultursubstrat wurde Chinakohl unter ansonsten gleichen Bedingungen angepflanzt.

Gemessen wurde dabei jeweils die Keimrate nach drei Wochen nach der Anpflanzung als Anzeichen für grundsätzliche Pflanzenverträglichkeit. Zusätzlich wurden die Pflanzen oberirdisch abschließend fotografiert und bonitiert.

### Ergebnisse

### Versuch 1

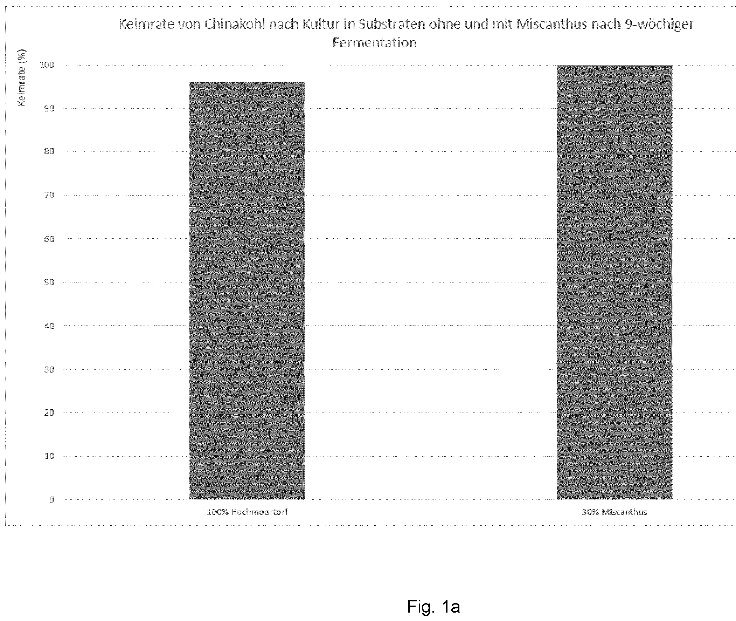

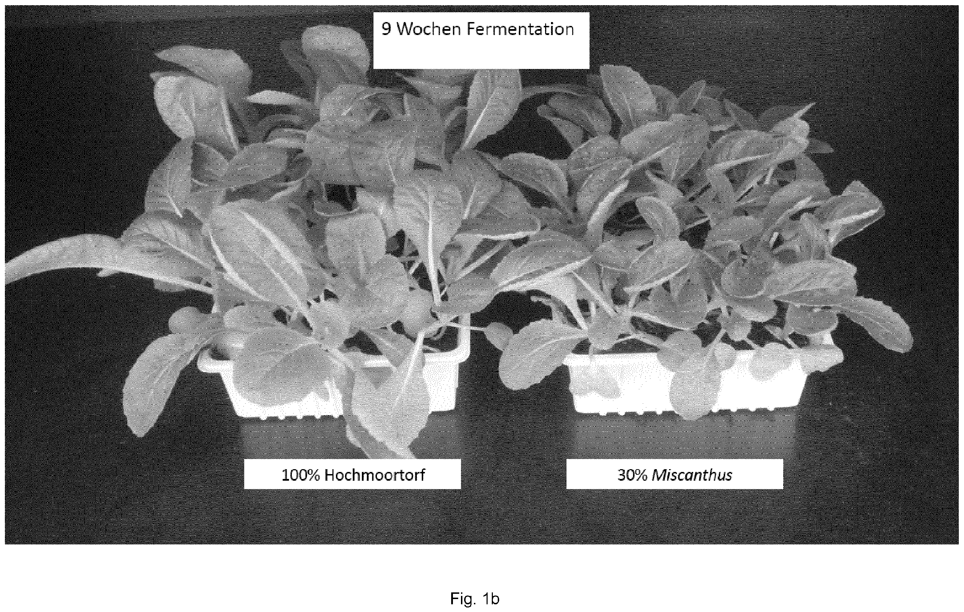

Fig. 1 a zeigt die Keimrate bei Verwendung von Kultursubstrat A im Vergleich zur Verwendung von Kontroll-Kultursubstrat. Die Keimrate bei der Verwendung von dem Kontroll-Kultursubstrat lag bei 96%. Die Keimrate bei der Verwendung von dem Kultursubstrat A lag bei 100% und war somit im direkten Vergleich besser als das Kontroll-Kultursubstrat.

Fig. 1 b zeigt die oberirdische Bonitur.

### Versuch 2

Fig. 2 a zeigt die Keimrate bei Verwendung von Kultursubstrat B im Vergleich zur Verwendung von Kontroll-Kultursubstrat. Die Keimrate bei der Verwendung von dem Kontroll-Kultursubstrat lag bei 93%. Die Keimrate bei der Verwendung von dem Kultursubstrat B lag bei 98% und war somit im direkten Vergleich besser als das Kontroll-Kultursubstrat.

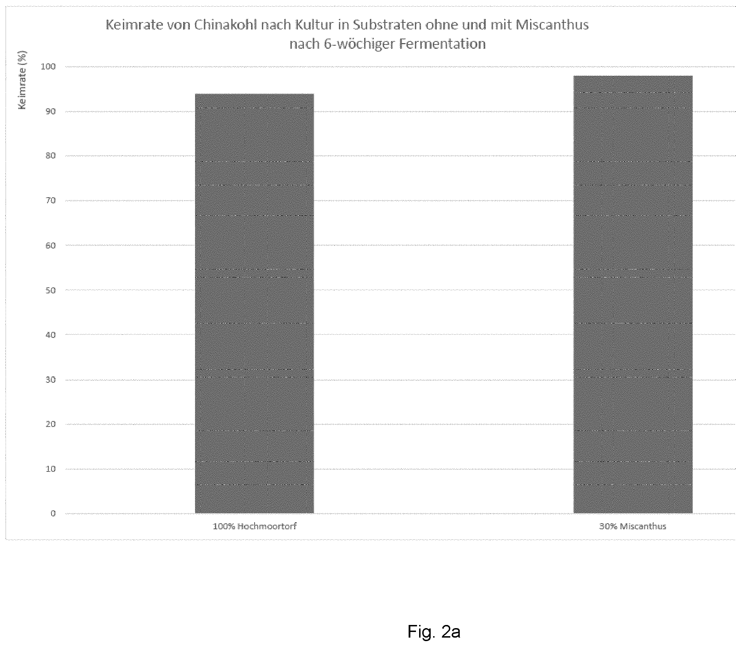

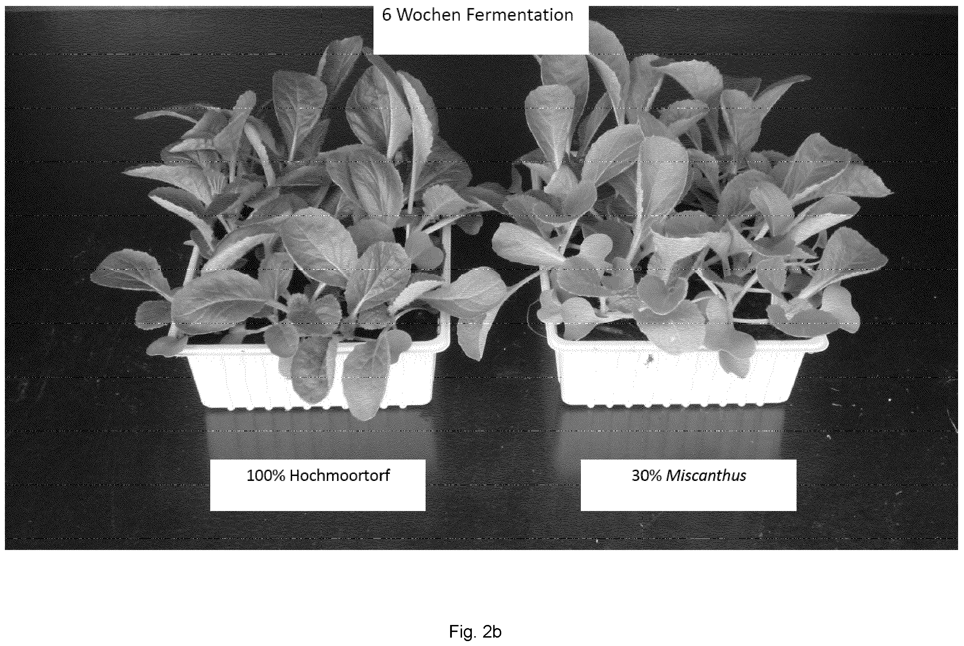

Fig. 2 b zeigt die oberirdische Bonitur.

### Versuch 3

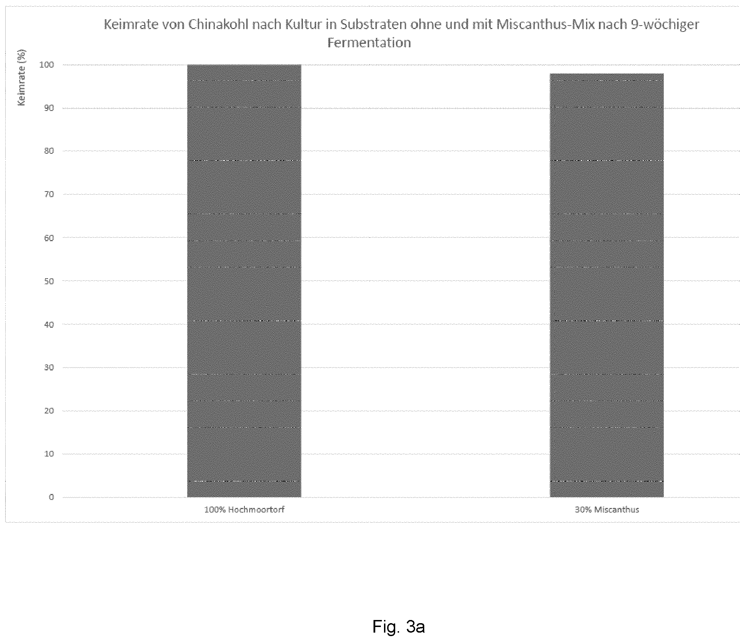

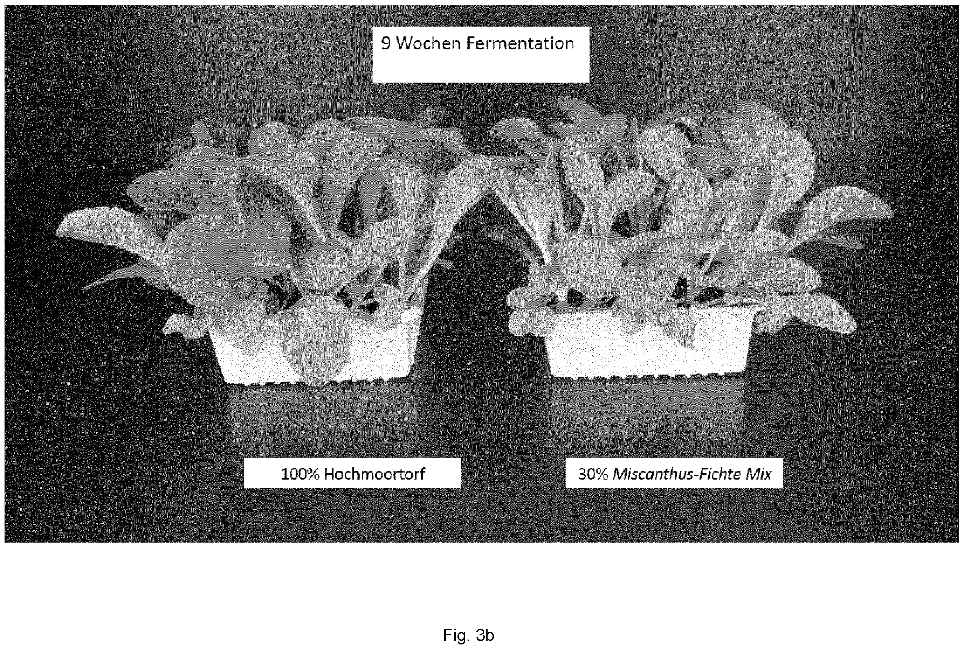

Fig. 3 a zeigt die Keimrate bei Verwendung von Kultursubstrat C im Vergleich zur Verwendung von Kontroll-Kultursubstrat. Die Keimrate bei der Verwendung von dem Kontroll-Kultursubstrat lag bei 100%. Die Keimrate bei der Verwendung von dem Kultursubstrat C lag bei 98% und war somit vergleichbar gut.

Fig. 3 b zeigt die oberirdische Bonitur.

Die Ergebnisse zeigen, dass bei anteiligem Ersatz von Hochtorfmoor mit einem Miscanthus-Mix keine Nachteile bezüglich der Keimrate und der oberirdischen Bonitur der Pflanzen erhalten werden und der Ersatz sogar teilweise zu einer verbesserten Keimrate führte.

## Patentansprüche

1. Substratausgangsstoff für Kultursubstrate und/oder Bodenhilfsstoffe **dadurch gekennzeichnet, dass** der Substratausgangsstoff
- fermentiertes *Miscanthus x giganteus,*
- Wasser,
- Bakterien und
- eine Kohlenstoff-Quelle enthält,
wobei der Anteil von fermentiertem *Miscanthus x giganteus* bei 70 bis 98 Vol.-% bezogen auf das Gesamtvolumen des Substratausgangsstoffs liegt.

2. Substratausgangsstoff nach Anspruch 1, **dadurch gekennzeichnet, dass** die Kohlenstoff-Quelle Saccharose oder Melasse ist und/oder dass die Bakterien heterofermentative und lebende Milchsäurebakterien sind.

3. Substratausgangsstoff nach zumindest einem der vorangegangenen Ansprüche, **dadurch gekennzeichnet, dass** der Substratausgangsstoff einen pH-Wert von ≤ 7, vorzugsweise von ≤ 6, bevorzugt von ≤ 5 besitzt.

4. Substratausgangsstoff nach zumindest einem der vorangegangenen Ansprüche, **dadurch gekennzeichnet, dass** der Anteil von fermentiertem *Miscanthus x giganteus* bei 75 bis 98 Vol.-%, vorzugsweise bei 80 bis 98 Vol.-%, weiter bevorzugt bei 85 bis 98 Vol.-%, ganz bevorzugt bei 90 bis 98 Vol.-%, ganz besonders bevorzugt bei 95 bis 98 Vol.-%, jeweils bezogen auf das Gesamtvolumen des Substratausgangsstoffes liegt.

5. Substratausgangsstoff nach zumindest einem der vorangegangenen Ansprüche, **dadurch gekennzeichnet, dass** der Substratausgangsstoff einen niedrigen Salzgehalt hat, vorzugsweise in einer Konzentration von 0,2 bis 1,5 g/L, bevorzugt in einer Konzentration von 0,3 bis 1,25 g/L, weiter bevorzugt in einer Konzentration von 0,5 bis 1,0 g/L, jeweils bezogen auf das Gesamtvolumen des Substratausgangsstoffes.

6. Substratausgangsstoff nach zumindest einem der vorangegangenen Ansprüche, **dadurch gekennzeichnet, dass** der Substratausgangsstoff eine Körnung von ≤ 20 mm, vorzugsweise eine Körnung von ≤ 15 mm, weiter bevorzugt von ≤ 10 mm hat.

7. Verfahren zur Herstellung von Substratausgangsstoff für Kultursubstrate und Bodenhilfsstoffe, **dadurch gekennzeichnet, dass** das Verfahren die Schritte umfasst:
a) Bereitstellen einer *Miscanthus x giganteus*-Zusammensetzung, die *Miscanthus x giganteus,* ein Siliermittel, Wasser und optional Salze enthält, wobei der Anteil von *Miscanthus x giganteus* bei 70 bis 98 Vol.-%, bezogen auf das Gesamtvolumen der *Miscanthus* x *giganteus*-Zusammensetzung liegt und
b) Fermentieren der in a) bereitgestellten Zusammensetzung.

8. Verfahren nach zumindest einem der vorangegangenen Ansprüche, **dadurch gekennzeichnet, dass** *Miscanthus x giganteus* in der *Miscanthus x giganteus-*Zusammensetzung in Form von *Miscanthus* x giganteus-Häcksel vorliegt, vorzugsweise mit einer Körnung von ≤ 100 mm, bevorzugt mit einer Körnung von ≤ 70 mm, weiter bevorzugt mit einer Körnung von ≤ 50 mm.

9. Verfahren nach zumindest einem der vorangegangenen Ansprüche, **dadurch gekennzeichnet, dass** die *Miscanthus* x *giganteus*-Zusammensetzung in Schritt a) *Miscanthus x giganteus,* das Siliermittel und Wasser im Verhältnis von 0,5 - 2 Tonnen : 2 - 7 kg : 0,5 - 2 m³, vorzugsweise im Verhältnis von 0,75 - 1,5 Tonnen : 3 - 6 kg : 0,75 - 1,5 m³, bevorzugt im Verhältnis von 1 Tonne : 5 kg : 1 m³ vorliegen.

10. Verfahren nach zumindest einem der vorangegangenen Ansprüche, **dadurch gekennzeichnet, dass** das Siliermittel eine Bakterien-Zusammensetzung, vorzugsweise aus heterofermentativen Milchsäurebakterien, besonders bevorzugt aus heterofermentativen Milchsäurebakterien in einer Konzentration von mindestens 100 × 10⁷ KBE pro g, vorzugsweise von mindestens 100 × 10⁸ KBE pro g, bevorzugt von mindestens 100 × 10⁹ KBE pro g, jeweils bezogen auf die Bakterien-Zusammensetzung und eine Kohlenstoff-Quelle, vorzugsweise Saccharose oder Melasse, enthält.

11. Verfahren nach zumindest einem der vorangegangenen Ansprüche, **dadurch gekennzeichnet, dass** das Fermentieren gemäß Schritt b) unter Pressung der *Miscanthus* x *giganteus*-Zusammensetzung erfolgt, vorzugsweise mit einem Druck von bis zu 50 bar, weiter bevorzugt mit einem Druck von bis zu 75 bar, besonders bevorzugt mit einem Druck von bis zu 100 bar, ganz bevorzugt mit einem Druck von bis zu 125 bar.

12. Verfahren nach zumindest einem der vorangegangenen Ansprüche, **dadurch gekennzeichnet, dass** das Fermentieren gemäß Schritt b) über einen Zeitraum von 6 bis 15 Wochen, vorzugsweise 12 bis 14 Wochen, bevorzugt 9 bis 11 Wochen, besonders bevorzugt 6 bis 9 Wochen, ganz besonders bevorzugt 6 bis 8 Wochen,
und/oder,
bei einer Temperatur von 5°C bis 50°C, vorzugsweise 8°C bis 45°C, bevorzugt 10°C bis 40°C, weiter bevorzugt 15°C bis 30°C, erfolgt.

13. Verfahren nach zumindest einem der vorangegangenen Ansprüche, **dadurch gekennzeichnet, dass** das Verfahren den weiteren Schritt umfasst:
c) Zerkleinerung der nach Schritt b) erhaltenen fermentierten *Miscanthus x giganteus*-Zusammensetzung,
wobei eine Körnung von ≤ 20 mm, vorzugsweise eine Körnung von ≤ 15 mm, weiter bevorzugt eine Körnung von ≤ 12 mm, ganz bevorzugt eine Körnung von ≤ 10 mm erzielt wird, die vorzugsweise homogen ist.

14. Verwendung von *Miscanthus x giganteus* zur Herstellung eines Substratausgangsstoffes für Kultursubstrate und Bodenhilfsstoffe und/oder zur Herstellung eines Torfersatzstoffes.

15. Substratausgangsstoff nach zumindest einem der Ansprüche 1 bis 6 hergestellt nach einem Verfahren nach zumindest einem der Ansprüche 7 bis 13.
